# EUROPÄISCHE PATENTANMELDUNG

(11) **EP 2 407 230 A1**
(43) Veröffentlichungstag der Anmeldung: **18.01.2012**
(21) Anmeldenummer: 11005803.9
(22) Anmeldetag: 15.07.2011
(51) Int. Cl.: B01D 53/26, C02F 11/12, F26B 21/08, B01D 53/14

(54) **Verfahren zur Sorptionstrocknung unter Einsatz von Kaliumsalzen, Vorrichtung zur Durchführung des Verfahrens und Weiterverarbeitung der erhaltenden Verfahrenserzeugnisse**

(30) Priorität: 16.07.2010 DE 102010027501; 18.04.2011 DE 102011017421; 03.08.2010 DE 102010033251; 01.12.2010 DE 102010052639; 01.12.2010 DE 102010052640; 01.12.2010 DE 102010053168; 13.06.2011 DE 102011106066
(71) Anmelder: Immoplan Technische Gebäudeausstattung, 76530 Baden-Baden (DE)
(72) Erfinder: Müller, Thomas, 01129 Dresden (DE)
(74) Vertreter: Sieckmann, Ralf

(57) **Zusammenfassung**

Offenbart wird ein Verfahren zur Sorptionstrocknung, umfassend folgende Schritte: das zu trocknende Gut (1) wird einer Wärmebehandlung unterzogen durch Wärmeleitung, oder / und durch einen gasförmigen Wärmeträger oder / und durch Wärmestrahlung, entstehende Brüden (16) wird über ein Sorbens aus einer wässrigen Alkalisalzlösung, die ausgewählt ist aus einer Kaliumhydroxidlösung und / oder Kaliumcarbonatlösung (18), bevorzugt einer konzentrierten, wässrigen Lösung von Kaliumcarbonat mit 50% - 100% Sättigung geleitet, wobei die Grenzfläche zwischen Brüden und Alkalisalzlösung durch technische Maßnahmen (15,17) flächenmäßig groß gehalten wird, eine Vorrichtung zur Durchführung des Verfahren und die Weiterverarbeitung der erhaltenen Wertstoffe zu (Mineral)Dünger, Ammoniumhydrogencarbonat, Wasser, CO₂.

## Beschreibung

### Einleitung

Die Erfindung betrifft ein Verfahren zur Sorptionstrocknung unter Einsatz von Kaliumsalzen, eine Vorrichtung zur Durchführung des Verfahrens und die Weiterverarbeitung der erhaltenden Verfahrenserzeugnisse.

Einsatzgebiet des Verfahrens stellen Trocknungs- und / oder weitere Stofftrennungsanwendungen dar. Dabei wird die wasserdampfdrucksenkende Wirkung von Kaliumsalzlösung sowie die selektive Chemiesorption zum gekoppelten Stoff- und Energietransport genutzt.

Bevorzugt sind dabei Fälle, in denen Wärmequellen zum Einsatz kommen, deren Temperaturniveau unter 100 °C liegt.

Beispiele, bei denen eine solche Kombination besonders sinnvoll ist, stellen folgende Anwendungsfälle dar:
- quantitative oder anteilige Entfernung von Wasser aus Gülle, Gärresten, ammoniumhaltigen Abwässern, Klärschlamm u. ä, insbesondere in Verbindung mit der Herstellung von Düngemitteln und / oder Energierohstoffen.
- Abreicherung von Wasser aus festen Rohstoffen, Energieträgern, Futtermitteln, Nahrungsmitteln, Wirtschaftsgütern o.ä. insbesondere dann, wenn bei der Trocknung mit Gerüchen oder anderen Emissionen zu rechnen ist.
- Rückgewinnung von Wasser und Wärmeenergie aus dem Wasserdampf von Abluft bzw. Brüden bei gleichzeitiger Chemiesorption von Geruchstoffen oder anderen Emissionen.

### Stand der Technik

Die DE 962 081 B betrifft ein Verfahren zum Trocknen und Vorkühlen wasserdampfhaltiger Luft zur anschließenden Luftverflüssigung unter Einsatz einer GlykolWasser-Mischung (Anspruch 1). Die DE 103 59 959 A1 betrifft ein Entfeuchtungsverfahren für feuchtes Biogas unter Einsatz von Glykolen (Anspruch 1, 3 und [0039] der Beschreibung).

Trocknungsverfahren für wasserhaltige Stoffe, die Wärmequellen nutzen, deren Temperatur unterhalb des Siedepunktes von Wasser liegt (bei Normaldruck also unter 100°C) arbeiten meist nach dem Prinzip der Konvektionstrocknung (Wärmetransport über Luft), als Kontakttrocknung / Eindampfverfahren unter Absenkung des Druckes (Siedepunktverschiebung). Letzteres kann mit Sorptionsspeichern (z.B. Zeolithe) kombiniert werden.

### Nachteile des Standes der Technik

Allen o.g. Methoden ist zu Eigen, dass entweder große Mengen an Wärmeenergie zum Aufheizen von Luft (bei Konvektionstrocknung) oder höherwertige Energieformen wie z.B. elektrische / mechanische Energie zum Verrichten von Volumenarbeit (Gasarbeit) aufgewendet werden müssen. Bei der Verwendung von Zeolith basierten Sorptionsspeichern wird zur Regeneration der Sorptionsspeicher Wärme auf sehr hohem Temperaturniveau benötigt. Durch das niedrige Temperaturniveau ist die Kinetik der Trocknung bzw. Stofftrennung gering, was geringe Raum-Zeit-Ausbeuten der Apparaturen und damit hohe spezifische Investitionskosten zur Folge hat.

Brüden, Abluft, Kondensate o.ä. müssen in der Regel aufwendig nachbehandelt werden (z.B. Ammoniakentfernung aus Brüden der Gärresttrocknung oder Geruchsbeseitigung aus Abluft von Futtertrocknung). Die Abluft von Trocknungsprozessen und deren Ableiteinrichtungen stellen zudem oft eine Quelle unerwünschter Keimentwicklung dar.

### Aufgabe der Erfindung.

Der Erfindung liegt die Aufgabe zugrunde, ein neues Verfahren zur Sorptionstrocknung bereitzustellen.

Diese Aufgabe wird durch den Einsatz spezieller wässriger Kaliumsalzlösungen gelöst, die als Sorbens die austretenden Brüden eines zu trocknenden Gutes effektiv aufnehmen können.

Die vorliegende Erfindung betrifft so ein Verfahren zur Sorptionstrocknung, umfassend folgende Schritte: das zu trocknende Gut wird einer Wärmebehandlung unterzogen durch Wärmeleitung, oder / und durch einen gasförmigen Wärmeträger oder / und durch Wärmestrahlung, entstehende Brüden wird über ein Sorbens aus einer wässrigen Alkalisalzlösung, die ausgewählt ist aus einer Kaliumhydroxidlösung und / oder Kaliumcarbonatlösung, bevorzugt einer konzentrierten, wässrigen Lösung von Kaliumcarbonat mit 50% - 100% Sättigung geleitet, wobei die Grenzfläche zwischen Brüden und Alkalisalzlösung durch technische Maßnahmen flächenmäßig groß gehalten wird.

Unter dem zu trocknenden Gut im Sinne der Erfindung wird hier ein Rohstoff, Zwischenprodukt oder Endprodukt verstanden, welches Wasser enthält, das aus diesem abgereichert werden soll. Die dampfdrucksenkende Wechselwirkung zwischen Gut und Wasser (z.B. durch Adhäsion) muss geringer als die durch das Kaliumhydroxid und / oder Kaliumcarbonat verursachte.

Bevorzugt ist das zu trocknende Gut ein Nahrungsmittel, insbesondere Milchpulver, ein land-, garten- oder forstwirtschaftliches Produkt, insbesondere eine Pflanzensaat, ein anorganischer und / oder organischer Abfall, insbesondere Exkrement von Wirbeltieren, Haushalts-, kommunale, landwirtschaftliche, forstwirtschaftliche und / oder industrielle Abwässer. Ganz besonders bevorzugt ist das zu trocknende Gut ein Bioabfall oder ein Exkrement von Menschen oder von Nutztieren, wie eine Gülle.

Die Erfindung eröffnet weiter die Möglichkeit, auf der Basis von NiedertemperaturWärme Trocknungsvorgänge bei höheren Temperaturen zu fahren, als sie die Wärmequelle selbst aufweist. Dabei weisen die Stoff- und Energietransporte aufgrund der hohen Temperaturen auch eine höhere Kinetik auf, wodurch die Raum-Zeit-Ausbeute der Apparaturen steigt. Dies wirkt sich kostendämpfend auf die Investition in die dazu notwendige Apparaturen aus. Die gleichzeitige Realisierung von Wärmerückgewinnung (Latentwärme) und Stofftrennung in einem Prozessschritt stellt eine starke Verkürzung der Prozessketten durch den Wegfall von Abluftbehandlungen o.ä. dar.

Hygienische Probleme durch Bakterien und Pilze werden minimiert. Bei vielen Anwendungen werden Rohstoffe gewonnen, die in herkömmlichen Verfahren auf Grund ihrer Verdünnung oder Vermischung als Abfall entsorgt oder teuer behandelt werden müssen.

Die Erfindung löst auch folgende Aufgaben:
1.0. das zu entwässernde Gut (bei festen oder flüssigen Gütern) erwärmt wird, so dass sich ein erhöhter Wasserdampf-Partialdruck in der umgebenden Gasphase ausbildet. Im Grenzfall ist das reiner Wasserdampf. Der Wärmeeintrag in das zu trocknende Gut erfolgt bevorzugt durch folgende technische Ausführungen:
1.1. überwiegend Kontaktübertragung, also durch Wärmeleitung, dabei wird das Gut auf der einen Seite einer wärmeleitfähigen Trennwand vorbeigeführt und warme Kaliumhydroxid- und / oder Kaliumcarbonatlösung oder ein Wärme-Vermittlungsmedium (z.B. Dampf der von der heißen Kaliumhydroxid- und / oder Kaliumcarbonatlösung erzeugt wurde) auf der anderen Seite der Trennwand vorbeigeführt wird. Beispiele dafür sind die in den technischen Ausführungsbeispielen genannten Walzentrockner (Innenbeheizt) oder Spiralentrockner / Trommeltrockner (außen beheizt). Elemente von Konvektions- und Strahlungstrocknung sind in diesen Ausführungen ebenfalls vorhanden, jedoch dominiert die Wärmeleitung.
1.2. Konvektionstrockner, bevorzugt solche, bei denen die zum Stoff- und Energietransport notwendige Luft (oder ein anderes gasförmiges Trägermedium) im Kreislauf gefahren wird.
2.0. das von Wasser abgereicherte Zielprodukt wird ausgeschleust.
3.0. die Gasphase wird mit Kaliumhydroxid- und / oder Kaliumcarbonatlösung in Kontakt gebracht, wobei große Kontaktflächen geschaffen werden. Dazu sind folgende technische Ausführungen bevorzugt:
3.1. Verrieselung in die Gasphase mit oder ohne Füllkörper, wobei die nachfolgende Trennung von Gas- und Flüssigphase durch mechanische Effekte wie Schwerkraft, Fliehkraft o.ä. erfolgt.
3.2. feines Versprühen von Kaliumhydroxid- und / oder Kaliumcarbonatlösung in die Gasphase, bevorzugt wird die Lösung zuvor elektrostatisch aufgeladen, wobei Feldionisation oder Leitungsionisation (die Flüssigkeit stellt den technischen Pluspol dar), besonders bevorzugt Leitungsionisation angewendet wird. Die Trennung von der Gas- und Flüssigphase erfolgt dann an der Abscheideelektrode, die bevorzugt als Strömungsreaktor (Rohr) und /oder als Fliehkraftabscheider (Zyklon) ausgeführt ist.
   Der Vorteil der Fliehkraftabscheidung besteht neben zusätzlichen mechanischen Abscheidungseffekten darin, dass sich die Stoffströme der Gas- und Flüssigphasen nach der Abscheidung nicht mehr kreuzen und so eine Rückvermischung minimiert wird.
3.3. einen Film bildende, rotierende Scheiben oder saugfähige, umlaufende Gewebe und ähnliche mechanische Vorrichtungen Durch den Kontakt der Kaliumhydroxid- und / oder Kaliumcarbonatlösung mit der Gasphase kommt es an der Grenzfläche zu einer Wechselwirkung. Diese wird bestimmt durch das Dampfdruckgleichgewicht zwischen der konzentrierten (50-100% Sättigung, bevorzugt 95% Sättigung) Kaliumhydroxid- und / oder Kaliumcarbonatlösung und dem Wasserdampf (Partialdruck) in der Gasphase. Die Wechselwirkung besteht in einer Absenkung des Dampfdrucks bzw. des Partialdrucks des Wassers in der Gasphase. So kommt es zu einer teilweisen bis quantitativen Abscheidung von Wasser in der Kaliumhydroxid- und / oder Kaliumcarbonatlösung. Damit einhergehend kommt es durch den Phasenübergang des Wassers zur Umwandlung von latenter Wärme in physikalische Wärme. Dies bewirkt einen Temperaturanstieg in der Kaliumhydroxid- und / oder Kaliumcarbonatlösung und, wenn vorhanden, in der Gasphase (bei quantitativer Abscheidung von reinem Dampf verschwindet die Gasphase).
4.0. im Falle einer verbleibenden Gasphase wird diese entweder als Umlaufgas genutzt (Konvektionstrocknung) bzw. einem weiteren Reaktor zugeleitet, in welchem die verbleibenden Gase zu Produkten umgesetzt (z.B. zu Ammoniumhydrogencarbonat im Falle von Gülleeindampfung) oder von einem weiteren Sorptionsmittel (z.B. einer Säure) resorbiert werden.
5.0. die Energie der erwärmten Lösung bzw. der erwärmten Gasphase dem zu trocknenden Gut zugeführt wird.
6.0. die sich durch die Resorption von Wasser verdünnende Lösung durch Zugabe von kristallinem Kaliumcarbonat auf hoher Konzentration gehalten wird. Wobei das Überschussvolumen zur Herstellung des kristallinen Kaliumcarbonates einer Regeneration (Wasserabreicherung) zugeführt wird, wobei
6.1. die Regeneration bevorzugt mit Niedertemperaturwärme, besonders bevorzugt mit Abwärme aus Energieumwandlungsprozessen (z.B. Abwärme aus Biogasanlagen, Kraftwerken etc.) oder Industrieprozessen durchgeführt wird
   wobei der Regenerator gleichzeitig die Funktion eines Kühlturms übernehmen kann. Die Regeneration erfolgt durch Verdunstung von Wasser in Luft an der Grenzfläche Kaliumcarbonatlösung-Luft. Die dafür notwendige Phasenumwandlungswärme wird dabei in die Flüssigkeit eingekoppelt. Dazu wird in einem Reaktor die Kaliumcarbonatlösung so mit Luft zusammen gebracht, dass eine möglichst große Grenzfläche zu einer schnellen Einstellung des Dampfdruckgleichgewichtes (welches bei ca. 40 % rel. Luftfeuchte liegt) führt. Hierzu werden bevorzugt Rieselverdampfer, Scheibenverdampfer o.ä. benutzt, bei denen die Separation des gebildeten kristallinen Kaliumcarbonates gut gelingt. Die Abluft der Regeneration wird bevorzugt zur Vorwärmung der in den Regenerator zugeführten Luft genutzt. Weiterhin kann die in der Abluft enthaltene Wärme (vorwiegend Latentwärme) für Niedertemperaturanwendungen (Fußbodenheizung, Fermenterheizung o.ä.) nochmals genutzt werden (Kaskadennutzung). Dabei fällt zusätzlich Kondensat an, welches ggf. nach Mineralisierung- als Brauchwasser genutzt werden kann. Die zur Regeneration notwendige Abwärme muss nicht zwingend am Standort zur Verfügung stehen, da die Kaliumcarbonatlösung zur Wärmequelle und das kristalline Kaliumcarbonat zur Apparatur transportiert werden kann. Das Kaliumcarbonat dient somit als Sorptionsspeicher hoher Speicherdichte.
6.2. die Regeneration mit Hilfe von Brüdenkompression (siehe technisches Ausführungsbeispiel) stattfindet, bevorzugt in den Fällen, bei denen keine Abwärme zur Verfügung steht (z.B. bei der Gülleeindampfung).
7.0. die Kaliumcarbonatlösung bei Erschöpfung des basischen Puffers durch thermische Läuterung recycelt wird, d.h. die Lösung wird eingedampft und die organischen Bestandteile werden verbrannt, so dass danach Kaliumkarbonat als Asche verbleibt, welche wieder eingesetzt wird.
8.0. oder an Stelle der thermischen Läuterung eine nasschemische Oxidation mit Hilfe von Oxidationsmitteln wie Wasserstoffperoxid - ggf. unter Zufuhr von energiereicher Strahlung zur Bildung von Hydroxylradikalen- bzw. durch elektrolytische Oxidation der Organik, bevorzugt an Diamantelektroden bei Stromdichten von 70 -300 mA / cm² erfolgt.
9.0. Sulfide aus der Lösung durch Fällungsrektionen, bevorzugt durch Fe (II) - Ionen ausgefällt und separiert werden.

Nach einer bevorzugten Ausführungsform werden bei dem Verfahren als technische Maßnahmen zur Vergrößerung der Grenzfläche zwischen Brüden und Alkalisalzlösung Füllkörperkolonnen, ein Versprühen oder Vernebeln, in oder ohne Verbindung mit Ionisation (bevorzugt Leitungsionisation) zur anschließenden elektrostatischen Abscheidung, ggf. zusätzlich durch Fliehkraftabscheidung unterstützt, oder durch Benetzung fester und bewegter Flächen eingesetzt.

Nach einer bevorzugten Ausführungsform nimmt bei dem Verfahren die Alkalisalzlösung neben der (Teil)Kondensation des Wassergehaltes des Brüdens zeitgleich eine Stofftrennung der nicht vom Brüden aufgenommenen separierten Komponenten z.B. Ammoniak, CO₂ und eine Sorption von anderen Brüdenbestandteile (z.B. organischer Säuren) in der Alkalisalzlösung vor.

Nach einer bevorzugten Ausführungsform werden bei dem Verfahren die von der Alkalisalzlösung aufgenommenen Brüdenbestandteile thermisch oder chemisch abgeschieden, vorzugsweise durch Fällung (z.B. Sulfid) oder / und thermische Läuterung oder / und nasschemische Oxidation, insbesondere durch Oxidationsmittel wie Wasserstoffperoxid oder durch elektrochemische Oxidation.

Nach einer bevorzugten Ausführungsform wird bei dem Verfahren die Alkalisalzlösung durch Erhöhung der Konzentration, d.h. durch Austreiben von Wasser, regeneriert, wobei diese Regeneration bevorzugt entweder durch Durchleiten von Luft durch die, - bevorzugt durch Niedertemperatur-Abwärme (50 - 100°C) beheizte, - Alkalisalzlösung erfolgt, - wobei die Grenzfläche zwischen Alkalisalzlösung und Luft durch technische Maßnahmen wie Verrieselung oder durch Benetzung bewegter Flächen vergrößert wird - oder durch Wärmepumpenprozesse, wobei das Verfahren einer Brüdenverdichtung zur Anwendung kommt, um die Kondensationswärme als Verdampfungswärme zurück zu gewinnen.

Nach einer bevorzugten Ausführungsform werden bei dem Verfahren für die Sorptionstrocknung durch Wärmeleitung bei organischem Abfall, insbesondere Gülle, Gärrest, Klärschlamm oder anderen flüssigen Substanzen Walzenverdampfer zum Einsatz kommen, in Verbindung mit der beschriebenen Sorptionstechnik.

Nach einer bevorzugten Ausführungsform werden die Verfahren zur Sorptionstrocknung und zur Regeneration der Alkalisalzlösung zeitlich und / oder räumlich getrennt ablaufen, wobei das Alkalisalz bzw. die Alkalisalzlösung als Sorptionsspeicher fungieren. Dadurch wird Abwärme z.B. aus Kraftwerken für Trocknungsprozesse zugänglich gemacht. Die Regeneratoren können in Kraftwerken gleichzeitig die Funktion des Kühlturms übernehmen.

Nach einer bevorzugten Ausführungsform werden bei dem Verfahren die bei der Überleitung des Brüdens über die Alkalisalzlösung durch Dampfdruckabsenkung verursachte Temperaturerhöhung, - die bei Atmosphärendruck und Verwendung von Kaliumcarbonatlösung bis maximal etwa 135 °C stattfindet, - zum Beheizen des zu trocknenden Gutes verwendet, wobei die Wärme durch die Alkalisalzlösung (Kontaktrocknung) oder den Restbrüden (Konvektionstrocknung) indirekt (bei Kontakttrocknung) oder direkt (bei Konvektionstrocknung) auf das zu trocknende Gut übertragen wird, wobei dies als chemische Wärmepumpe abläuft, und die Kondensationswärme als Verdampfungswärme zurückgewonnen wird.

Die vorliegende Erfindung betrifft weiter eine Vorrichtung zur Durchführung des Verfahrens der vorgenannten Art wobei der Trocknungsbehälter aber auch die Vorrichtung zur Regeneration der Alkalisalzlösung gegen Gasdiffusion und Wärmetransmission an die Umgebung isoliert ist.

Bevorzugt ist es hier, die Sorptionstrocknung bei nicht-schüttfähigen Gütern durch einen Konvektionstrockner, vorzugsweise einen Hordentrockner, und bei schüttfähigen Gütern durch Kontakttrocknung vorzunehmen und die Regeneration der Alkalisalzlösung durch Brüdenverdichtern, vorzugsweise mittels Walzenverdampfer, Rieselverdampfer und / oder Scheibenverdampfer vorzunehmen.

### Weiterverarbeitung:

Die vorliegende Erfindung betrifft weiterhin die Weiterverarbeitung der Verfahrenserzeugnisse.

Hier können zu trocknende Güter aus ammoniakhaltigen Substanzen, wie Gülle, Gärrest, Klärschlamm im Zuge der Sorption des Wasserdampfes und der organischen Säuren verbleibenden Restbrüden, -welcher hauptsächlich aus Ammoniak, CO₂ und Wasserdampf (Gasfeuchte) besteht-, zu Ammoniumhydrogencarbonat weiterverarbeitet werden, wobei der Restbrüden während des Eindampfprozesses eine wenigstens stöchiometrische Menge an reinem CO₂ oder CO₂-reichen Gasgemischen zugeführt wird. Derartige Gasgemische können z.B. aus Biogas stammen.

Weiter kann das getrocknete Gut aus anorganischem oder organischem Abfall zu Trockendünger oder nach Entfernung der organischen Bestandteile (z.B. durch thermische Prozesse) zu Mineraldünger weiterverarbeitet werden.

Schließlich können die erhaltenen separierten Brüdenbestandteile zu Kohlendioxid und / oder Wasser, vorzugsweise in Form von Brauchwasser weiterverarbeitet werden.

### Vorteile der Erfindung gegenüber dem Stand der Technik

Für den Energieverbrauch des Gesamtprozesses (Sorption und Regeneration) ist der Regenerationsprozess maßgeblich. Durch die Einkopplung der Wärme in die Flüssigkeit - an Stelle von Luft - ist neben der geringeren notwendigen Wärmetauscherfläche (durch den besseren Wärmeübergangswert) auch der notwendige Energiebetrag zur Entfernung des Wassers geringer als bei Konvektionstrocknung von Gütern, da der Anteil mit erwärmter Luft wesentlich geringer ist. Hier entfällt nämlich der Nachteil der geringen Wärmekapazität von Luft. Außerdem ist auch die Rückgewinnung der physikalischen Wärme der Abluft wesentlich vereinfacht (geringere Volumenströme, verschmutzungsarme Abluft). Durch die höheren Temperaturen während der Trocknung und der Chemiesorption kann bei der erhöhten Temperatur (die Lösung wirkt als "chemische Wärmepumpe") eine verbesserte Kinetik zur Verkleinerung der Apparatur bzw. zur Erhöhung der Raum-Zeit-Ausbeute gegenüber herkömmlichen Konvektionstrocknungsverfahren genutzt werden.

Aufgrund der hohen Basizität der Kaliumcarbonatlösung bzw. Kaliumhydroxidlösung bleiben - durch für Bakterien und Pilze lebensfeindliche Bedingungen - stets hygienische Bedingungen gewahrt. Eine zeitliche und / oder räumliche Entkopplung von Wärmebereitstellung und Sorptionstrocknung / Chemiesorption ist auf Grund der hohen Speicherdichte des Sorptionsspeichers Kaliumcarbonat und der daraus resultierenden Transportwürdigkeit gegeben.

Es gibt keine direkte Verbindung zwischen zu trocknendem Gut und der Umgebungsluft. Das Wasser geht immer den "Umweg" über die Lösung. Dort werden viele Geruchsstoffe in Folge Chemiesorption (meist Salzbildung) zurückgehalten, so dass insgesamt eine starke Reduktion der Immissionen in die Umwelt resultiert.

Stofftrennungen wie z.B. Wasserdampf / Ammoniak erfolgen in einem Arbeitsschritt mit der selektiven Sorption von Wasser an der kaliumhydroxid- bzw. Kaliumcarbonatlösung. In diesem Beispiel wird Ammoniak aufgrund der geringen Löslichkeit von Ammoniak in Wasser bei hoher Temperatur und der hohen Basizität (Gleichgewichtsverschiebung NH₄⁺ / NH₃ auf die Seite des NH₃) der Kaliumcarbonatlösung kaum in dieser gelöst.

Die vorliegende Erfindung wird nunmehr durch Ausführungsbeispiele näher erläutert.

Es zeigen:
- Figur 1: eine Kontakttrocknung von Schlämmen organischer Abfälle und die Weiterverarbeitung zu Wertstoffen
- Figur 2: eine Kontakttrocknung schüttfähiger Güter
- Figur 3: eine Konvektionsstromtrocknung nicht schüttfähiger Güter mittels eines Hordentrockners
- Figur 4: eine Regeneration der Kaliumsalzlösung mittels eines Rieselverdampfers

### Beschreibung an Hand von Ausführungsbeispielen

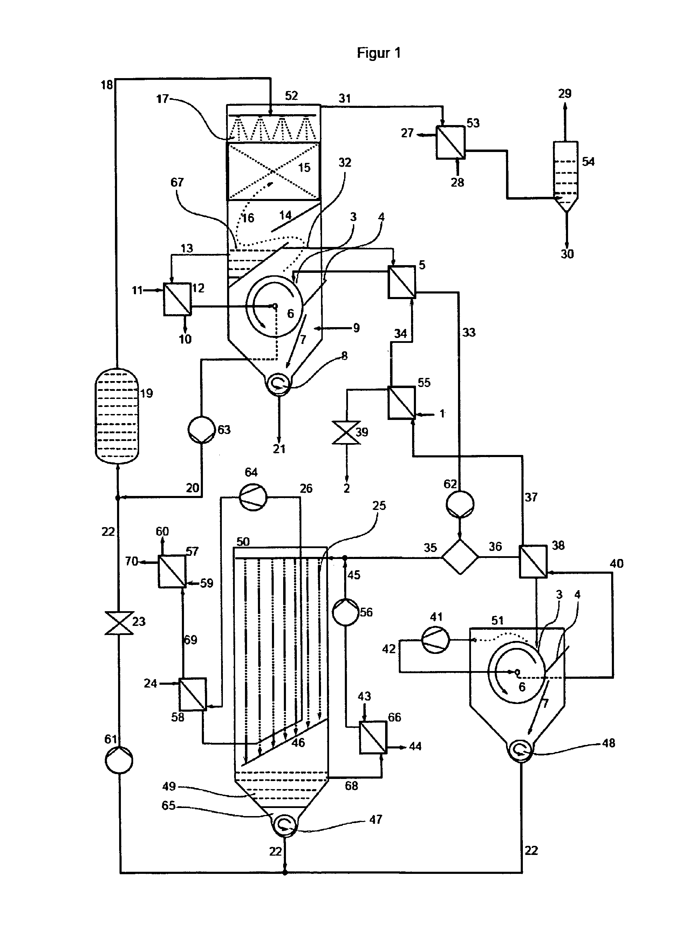

1.0. Gärrest-, Gülle oder Klärschlammeindampfung im Kontakttrocknungsverfahren und die Weiterverarbeitung der verbleibenden Gasphase (NH₃ / CO₂) nach der selektiven Sorption von Wasser aus Wasserdampf / Ammoniak / CO₂ -Gemischen zu Düngemitteln oder chemischen Rohstoffen oder Energierohstoffen (Figur 1)
1.1. Verdampfung von Wasser unter Verbrauch von kristallinem oder gesättigtem Alkali:

Für die Behandlung von flüssigem Ausgangsmaterial wird hier-als Spezialfall der Kontakttrocknung von flüssigen Gütern - das Eindampfen von Gärrest, Gülle oder kommunalen Klärschlamm beschrieben. Diesen Substraten ist gemeinsam, dass sie - je nach Vorbehandlung - nur geringe Feststoffgehalte aufweisen und bei der Eindampfung neben Wasserdampf auch große Mengen CO2, Ammoniak und flüchtige organische Verbindungen frei gesetzt werden. So stellt der Brüden stets ein Stoffgemisch mindestens dieser Komponenten dar. Weiterhin haben die Ausgangssubstrate die Eigenschaft bei Erwärmung stark zu schäumen. Diese Schaumbildung hat ihre Ursache in der Bildung von Gasblasen (z.B. durch den wärmeinduzierten Zerfall von Ammoniumverbindungen wie Ammoniumcarbonat), sowie von Dampfblasen bei Erreichen des Siedepunktes in Verbindung mit oberflächenaktiven Substanzen, die im Substrat enthalten sind. Diese setzen die Oberflächenspannung des Wassers stark herab, so dass es zu einer extremen Schaumbildung kommt. Diese Schaumbildung gestaltet eine Eindampfung in offenen Reaktoren extrem schwierig. Daher werden in der hier beschriebenen technischen Lösung Walzenverdampfersysteme (52) eingesetzt. Auf die Walzen wird jeweils nur ein dünner Film des Substrates aufgebracht (3). Bei der Aufbringung kann das Substrat (1) bereits im Wärmetauscher (5), sowie ggf. zusätzlich im Wärmetauscher (55) durch Vorwärmung zur Schaumbildung gebracht werden, so dass der Auftrag auf die Walze (6) als dünne Schaumschicht erfolgt. Durch den Kontakt mit der Verdampferwalze (6), welche auf über 100°C beheizt wird, wird das Wasser aus dem Substrat durch die Verdampfung ausgetrieben. Es verbleibt ein fester Rückstand, welcher vom Abstreifmesser (4) von der Walzenoberfläche entfernt wird, nach unten fällt und über die Austrageinrichtung (8) aus dem System ausgeschleust wird. Das feste Zielprodukt (21) enthält alle Wertstoffe (im Fall von Gülle / Gärrest) bzw. alle festen Bestandteile (Klärschlamm) außer den flüchtigen Ammoniumverbindungen. Flüchtige organische Verbindungen, H₂S, sowie ggf. staubförmigen Mitriss kann direkt als Dünger verwendet werden oder ggf. nach thermischer Weiterverarbeitung zu Mineraldünger aufgearbeitet werden.

Das Wasserdampf, Ammoniak, CO₂, flüchtige organische Verbindungen und den Mitriss enthaltende Gasgemisch (16), - welches eine Temperatur von etwa 100°C hat -, wird im Gegenstrom durch eine Füllkörperkolonne (15) geleitet, wo sie mit konzentrierter, wässriger, Alkalilösung, - bevorzugt Kaliumcarbonatlösung - unter großer Grenzfläche in Kontakt gebracht wird. Aufgrund der kolligativen Eigenschaften der konzentrierten Alkalilösung, d.h. insbesondere der Absenkung des Wasserdampfpartialdruckes unter den Atmosphärendruck kommt es zur Kondensation des Hauptanteils des Wassers (es verbleibt nur die "Gleichgewichtsfeuchte" entsprechend dem abgesenkten Partialdrucks). Durch die Kondensation des Wasserdampfes wird dessen Phasenumwandlungswärme frei. Dies äußert sich als physikalische Wärme in einer Temperaturerhöhung der Alkalilösung. Diese Temperaturerhöhung würde bis zu einem neuen Gleichgewichtszustand bei höherer Temperatur, also bis zum Sieden der Alkalilösung führen. Dieser neue Gleichgewichtszustand wird jedoch verhindert, indem die durch das Leitblech (14) in den Lösungssumpf (67) geleitete, heiße (ca. 120°C) durch das Innere der Verdampferwalze (6) geleitet wird und so die Wärme über diese Walze an die bei etwa 100°C siedende, auf der Walze befindliche Flüssigkeit als Verdampfungswärme abgibt. Die abgekühlte Lösung wird über Leitung (20) dem Behälter (19) zugeführt, dem wiederum regelmäßig Salz oder Salzsuspension zugeführt wird. Dort wird die Konzentration bis maximal zur Sättigung "aufgefüllt" und die so gesättigte Lösung wird über Leitung (18) wieder in die Kolonne verrieselt. Der durch die Aufnahme von Wasser entstehende Volumenüberschuss wird statistisch über die Überlaufleitung (32) dem Wärmetauscher (5) zugeführt, wo er seine Restwärme - wie oben beschrieben - an das Ausgangssubtrat übergibt. Anschließend wird die Salzlösung über die Leitung (33), mit Hilfe der Pumpe (62) der Regeneration (Konzentrationserhöhung) zugeführt. Unter adiabatischen Bedingungen wäre so (abgesehen von einer anfänglichen Aufheizung) keine äußere Energiezufuhr notwendig.

Jedoch lässt sich ein solches System in der Praxis nicht realisieren, so muss über den Wärmetauscher (12) Wärme, auf einem höheren Temperaturniveau als die der Alkalilösung, zum Ausgleich von Verlusten und zum Start über den Heizkreisvorlauf (11) und den Heizkreisrücklauf (10) zugeführt werden. Hier können auch gasförmige Wärmeträger wie z.B. Abgas zum Einsatz kommen. Die Salzlösung in der Rieselkolonne ist aufgrund der Temperatur und des hohen PH-Wertes (Ammoniak /Ammonium - Gleichgewicht nahezu komplett auf der Ammoniakseite) nur zur Aufnahme geringer Mengen an Ammoniak befähigt. Durch das Vorhandensein von CO₂ im Überschuss (Zuführung über Leitung (9)) wird auch dieser geringe Teil noch nahezu vollständig ausgestrippt. So wird gewährleistet, dass sich in der Salzlösung praktisch kein Ammoniak / Ammonium findet. So kann auch später bei der Regeneration kein Ammoniak gasförmig in die Umgebung gelangen oder im Kondensatwasser verbleiben.

Die Stofftrennung und die "chemische Wärmepumpe" werden so in einem Verfahrensschritt realisiert.

Das nunmehr als Volumenüberschuss vorhandene aus CO₂, Ammoniak und Gasfeuchte bestehende Gasgemisch (flüchtige, saure organische Verbindungen und H₂S wurden im Alkali gebunden) wird durch Abkühlung im Wärmetauscher (53) zunächst auskondensiert. Dabei löst sich das Ammoniak im Kondensatwasser und reagiert dann im .Reaktor (54) mit dem im Überschuss vorhandenen CO₂ zu Ammoniumhydrogencarbonat bzw. zu einer wässrigen Lösung derselben. Die Kühlung mit dem Vorlauf (28) und dem Rücklauf (29) kann durch Wärmepumpen oder klassische Kühlverfahren erfolgen.
1.2. Regeneration (Konzentrationserhöhung) des Alkali

Da der oben beschriebene Prozess unter Verbrauch kristallinen Alkali oder gesättigter Alkali-Lösung arbeitet, muss an einer anderen Stelle die Konzentration des Alkalis durch Entzug von Wasser erhöht werden. Dieser Prozess kann jedoch durch Pufferung zeitlich oder räumlich getrennt vom o.g. Prozess erfolgen. So kann die Aufkonzentration des Alkalis mit Hilfe von Abwärme (z.B. aus Kraftwerken und Blockheizkraftwerken oder auch aus technischen Prozessen) erfolgen. So stellt das Alkali einen Sorptions-Wärmespeicher dar.

Für die technische Durchführung der Regeneration gibt es aber nicht nur den Weg über die Nutzung von Abwärme (35), sondern auch den Weg über Brüdenverdichtung (36), welcher letztlich einen Wärmepumpenprozess darstellt, bei dem die Kondensationswärme des ausgetrieben Wassers wieder als Verdampfungswärme zurückgewonnen wird.
1.2.1. Regeneration unter Nutzung von Abwärme:

Über die Leitung (35) wird in dem Rieselverdampfer (50) Alkali-Lösung eingebracht und verrieselt. Im Gegenstrom wird Luft (24), angerieben durch das Gebläse (64) in den Rieselverdampfer eingeleitet (welche ggf. unter Wärmerückgewinnung der Abluft (26) vorgewärmt wird). Die Luft erwärmt sich an der herabrieselnden Lösung (25) und nimmt Wasser bis zur Gleichgewichtsfeuchte auf. Durch die Verdunstung von Wasser kühlt sich die Alkali-Lösung ab und gelangt über das Leitblech (46) in den Sumpf (49). Auf dem Weg durch den Rieselkühler hat sich an der herabrieselnden Alkali-Lösung Salz gebildet. Einmal durch den Verlust des Wassers bis über die Sättigungsgrenze hinaus, aber auch in Folge der Abkühlung (die Löslichkeit des Salzes nimmt mit fallender Temperatur ab). Diese Kristalle sedimentieren nunmehr im Sumpf (49) als Bodenkörper (65). Von dort aus wird der Bodenkörper über Schnecken oder Breipumpen als Suspension ausgetragen. Über die Leitung (22) und die Pumpe (61) wird die Suspension dosiert (Dosierventil 23) in den Behälter (19) gebracht, sodass die Konzentration im Behälter (19) eingestellt werden kann. Als Messgröße der Konzentration lässt sich die Leitfähigkeit oder die Dichte der Alkali-Lösung nutzen.

Eine Nachnutzung der Abwärme der feuchten Luft, insbesondere deren Latentwärme wird hier im Wärmetauscher (57) angedeutet. Hier kann Wärme - insbesondere durch Auskondensation - auf geringerem Niveau ausgekoppelt werden. Dabei ist besonders die Hintereinanderschaltung von Regeneratoren interessant, da hier der spezifische Trocknungswärmeverbrauch noch weiter gesenkt werden kann. Ebenfalls kann auf diese Weise ein Teil des Wassers (ggf. nach Mineralisierung) als Brauchwasser wieder verwendet werden.
1.2.2. Regenration unter Nutzung von Brüdenverdichtern Ausführungsbeispiel mit Walzenverdampfern.

Wenn keine oder zu geringe Mengen an Abwärme zur Verfügung stehen, kann die Regeneration der Lösung durch Brüdenkondensation (Wärmepumpe) erfolgen. Dies trifft insbesondere dort zu, wo Gülle beseitigt werden muss, jedoch keine Biogasanlage mit Abwärme oder andere Abwärmequellen zur Verfügung stehen. Bei optimaler Auslegung benötigt die Apparatur dann etwa 5-10 % der notwendigen Verdampfungswärme in Form von mechanischer Energie. (Elektroenergie)

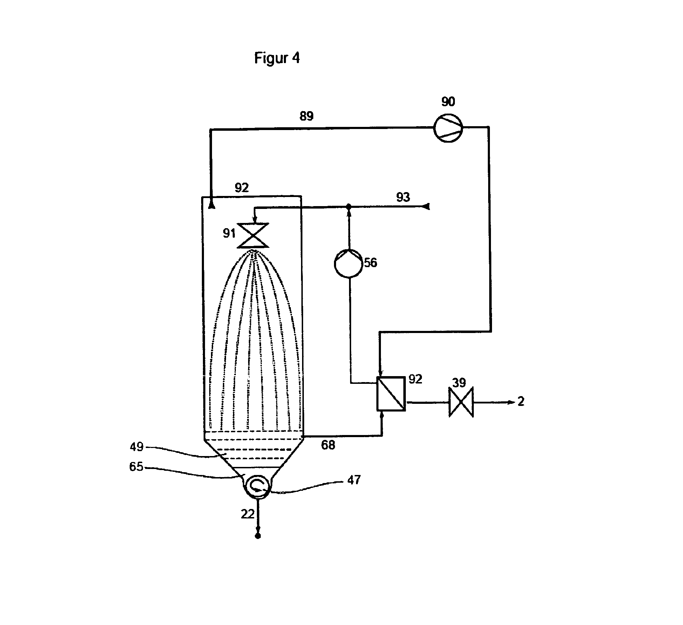

Die über Leitung (36) zugeführte Lösung wird im Wärmetauscher (38) mit Hilfe der physikalischen Wärme des Kondensates (4) vorgewärmt und anschließend auf die Verdampferwalze (6) in dünner Schicht (3) aufgetragen. Dort verdampft der Wasseranteil bei etwa 135 °C (Siedepunkt der gesättigten Lösung ohne Übersättigung). Es verbleibt an der Oberfläche der Walze ein fester Rückstand aus Salz (7) oder ein teileingedampftes breiiges Produkt, welches durch das Abstreifmesser (4) abgetragen und über die Austrageinrichtung (48) ausgetragen wird. Über die Leitung (22) wird dann mit dem Salz wie oben verfahren. Der ausgetriebene Wasserdampf von etwa 135°C, welcher unter Atmosphärendruck steht, stellt physikalisch gesehen überhitzten Wasserdampf dar. Dieser ist nun auf eine Temperatur zu bringen, die eine Wärmeübertragung über die Walze ermöglicht. Der durch die Walze über Leitung (41) geleitete überhitzte Dampf wird daher durch den Verdichter (41) auf etwa 4 bar (abs.) verdichtet. Damit ist er dann im Bereich des Sattdampfes und die Temperatur des Dampfes erhöht sich auf etwa 140-145 °C. Nun ist ein Temperaturgradient vorhanden und die Wärme kann durch die Walzenoberfläche übertragen werden. Dabei wird der Dampf im Inneren der Walze kondensiert und gibt seine Kondensationswärme als Verdampfungswärme auf der Walzenoberfläche ab. Die physikalische Wärme des entstehenden Kondensats wird - wie bereits beschrieben - über den Wärmetauscher (38) z.T. zurückgewonnen. Verbleibende Restwärme (statistisch die Energiemenge der eingesetzten mechanischen Energie) wird dann für die Vorheizung des Substrates (1) im Wärmetauscher (55) genutzt. Über das Druckregelventil (39) wird dann das gekühlte Kondensat (2) und ggf. vorhandene Gase bei einem Gegendruck von ca. 4 bar (abs.) ausgeschleust und kann ggf. als Brauch- oder Prozesswasser wieder verwendet werden.
1.2.3. Die Regenration unter Nutzung von Brüdenverdichtern Ausführungsbeispiel mit Rieselverdampfern (Figur 4).

Alternativ kann diese Form der Regenration auch in Verdampferbehältern mit Verrieselung der durch Brüdenverdichter beheizten Lösung erfolgen.

Dazu wird über die Leitung (93) die zu regenerierende Lösung in den durch die Pumpe (56) angetriebenen Kreislauf eingebracht und mit der ca. 140-150°C warmen Umlaufflüssigkeit vermischt. Die Mischtemperatur ändert sich auf Grund der Mengenverhältnisse nur unwesentlich. Am Ventil (91), welches einen Gegendruck von mindestens 1 bar, bevorzugt mehr als 4 bar, gewährleistet wird die Lösung verrieselt. Sobald die überhitzte Lösung die Druckleitung über das Ventil verlässt, verdampft ein Teil des Wassers und zwar so lange, bis eine Temperatur von etwa 135°C erreicht ist. In Folge der Verdampfung kristallisiert Salz während der Rieselzeit aus. Dieses sedimentiert am Boden des Behälters (92) und wird als Bodenkörper (65) über die Austrageinrichtung (47) ausgeschleust. Die überstehende Lösung (49) wird über die Leitung (68) dem Wärmetauscher (92) zugeführt, wo diese wieder auf ca. 140-145°C erwärmt wird. Der bei der Verdampfung im Behälter (92) entstandene überhitzte Dampf wird über die Leitung (89) zum Brüdenverdichter (90) geleitet und auf etwa 4 bar (abs.) verdichtet, wodurch der Dampf sich etwa auf 140-145 °C erwärmt und in den gesättigten Zustand übergeht. Im Wärmetauscher (92) kondensiert der Dampf aus und übergibt seine Kondensationswärme an die Salzlösung, die auf Grund des Drucks in der Leitung nicht sieden kann, sondern erst wenn sie sich im Behälter (92) entspannt. Das Ventil (39) sorgt für den notwendigen Gegendruck beim Ausschleusen des Kondensates (2).
1.2.4. Ausführungsbeispiel Anwendung von Scheibenverdampfern zur Regeneration von Kaliumcarbonatlösung

Neben den bereits oben beschriebenen Möglichkeiten zur Regeneration (Aufkonzentration) des Alkalis durch Walzenverdampfer (51) oder Rieselverdampfer (50) soll hier noch eine weitere Form der Aufkonzentration erwähnt werden, nämlich den Scheibenverdampfer.

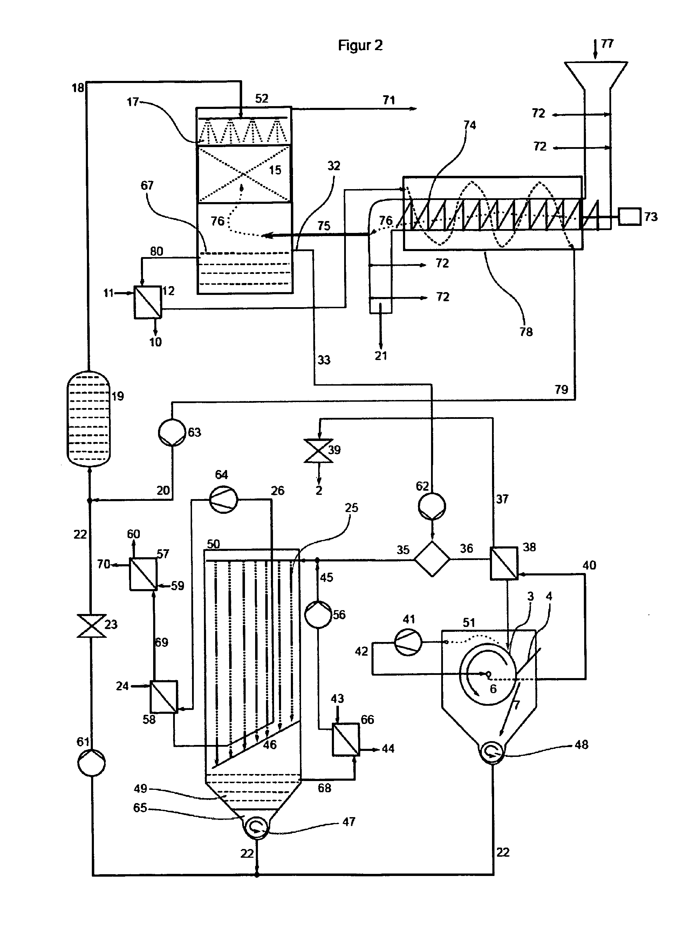

Diese stellen - neben den Rieselverdampfern - eine weitere Möglichkeit dar, mit der Niedertemperatur Abwärme zu regenerieren. Dabei handelt es sich um vertikal angeordnete, um eine Achse rotierende Scheiben, die mit der unteren Hälfte in die Salzlösung (Sumpf) eintauchen, mit dieser benetzt werden und im Gegenstrom zur Rotation mit Luft beaufschlagt werden. Die Verdampfung geschieht hier ebenso wie beim Rieselverdampfer, jedoch werden die an den Scheiben kristallisierenden Salze mit einem Messer abgetrennt. Das Interessante bei dieser Möglichkeit ist, dass die Scheiben einen Wärmespeicher darstellen. Insbesondere dort, wo für Rieselkolonnen keine ausreichenden Bauhöhen zur Verfügung stehen, stellen die Scheibenverdampfer eine Alternative dar. Die Einbindung der Wärme erfolgt bei den Scheibenverdampfern im Sumpf direkt in die Flüssigkeit durch Wärmetauscher.
2.0. Ausführungsbeispiel 2: Trocknung von Schüttgut (z.B. Energierohstoffe, Futter, Holzspäne o.ä.) im Kontakttrocknungsverfahren (Figur 2)
2.1. Verdampfung von Wasser unter Verbrauch von kristallinem oder gesättigtem Alkali:

Ähnlich wie im Ausführungsbeispiel 1 wird auch bei der Kontakttrocknung von Schüttgütern ein gesättigter Dampf erzeugt, indem dem zu trocknenden Gut durch Wärmeleitung Wärme zugeführt wird. Dieser gesättigte Dampf wird wieder - unter Salzverbrauch - in der gesättigten Lösung kondensiert, sodass die zurückgewonnene Kondensationswärme eine Temperaturerhöhung in der Lösung bewirkt und die Lösung dann zur Beheizung der Verdampfungsapparatur genutzt wird. Jedoch werden hier keine Walzenverdampfer eingesetzt, sondern Rekuperatoren, bei denen das Schüttgut durch eine Fördereinrichtung (74) - bevorzugt eine Förderspirale, besonders bevorzugt eine achsenlose Förderspirale - im Gegenstrom zum Heizmedium, welches den äußeren Mantel durchfließt - bewegt wird. Der Antrieb (73) regelt dabei die Verweilzeit des Gutes in der Verdampfereinrichtung. Durch Schleusensysteme - hier im Beispiel durch Schieber (72) realisiert - wird verhindert, dass der Sattdampf (76) in die Umgebung austritt. Die zur Verdampfung des Wassers des Schüttgutes notwendige Wärme wird auf 3 Wegen von der Wandung her übertragen:
● durch Wärmeleitung der an der inneren Wandung des Rekuperators anliegenden Schüttgutpartikel
● durch Konvektion, indem Sattdampf an der inneren Wandung des Rekuperators überhitzt wird und so Wärme über das gasförmige Trägermedium an das Schüttgut übertragen wird
● durch Strahlung (vorwiegend im langwelligen IR-Bereich) und Sorption der Strahlung vom Schüttgut unter Wärmeentwicklung.

Jedoch besteht der Haupteffekt des Wärmetransportes durch Wärmeleitung. Zusammenfassend wird der Weg des Schüttgutes und der Salzlösung folgendermaßen beschrieben:
Das Schüttgut wird über die Aufgabe (77) durch ein Schleusensystem mit den Schleusenschiebern (72) geführt, welches einen minimalen Lufteintrag gewährleisten soll. Die Förderung des Gutes innerhalb des als Rekuperator ausgeführten Verdampfers erfolgt durch die Transporteinrichtung (74). Im Doppelmantel (78) des Verdampfers fließt in umgekehrter Bewegungsrichtung heiße Salzlösung aus dem Sumpf (67) - welche ggf. vom Wärmetauscher (12) nachgeheizt wird -. Nach Abgabe von Wärme (physikalische Wärme) an das Gut (als Verdampfungswärme) wird die Salzlösung über Leitung (20) - angetrieben durch Pumpe (63) - in den Flüssigkeitskreislauf der Füllkörperkolonne (52) eingebunden.
Wie im Ausführungsbeispiel 1 wird hier im Behälter (19) die Regulation der Konzentration der Lösung organisiert. In der Füllkörperkolonne wird dann der aus der Verdampferapparatur austretende Brüden (Sattdampf) (76) über die Leitung (75) durch die Füllkörper geleitet und so mit der Salzlösung in Kontakt gebracht. Nicht kondensierbare Bestandteile der Brüden (z.B. eingetragene Luft) werden über die Leitung (71) an die Umgebung abgegeben.

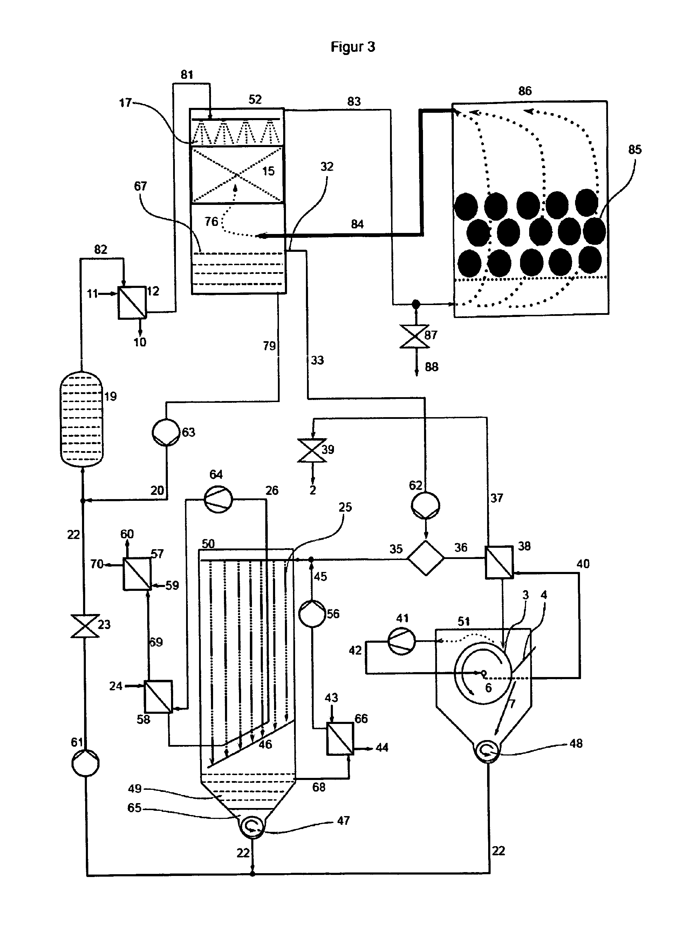

Die durch die Kondensation des Wasserdampfes verursachte Temperaturerhöhung der nach unten abrieselnden Salzlösung, die sich im Sumpf (67) sammelt wird zum Beheizen der Verdampferapparatur genutzt. Aus der Verdampferapparatur wird das getrocknete Schüttgut über Schleusen ausgetragen.
2.2. Regeneration (Konzentrationserhöhung) des Alkali Hier wird genauso wie im Punkt 1.2. verfahren.
3.0. Ausführungsbeispiel 3: Trocknung von Schüttgut (z.B. Energierohstoffe, Futter, Holzspäne o.ä.) oder nicht schüttfähigen Gütern im Konvektionstrocknungsverfahren (Figur 3)
3.1. Verdunstung von Wasser unter Verbrauch von kristallinem oder gesättigtem Alkali:

Nicht alle zu trocknenden Güter können wie unter Ausführungsbeispiel 3 ausgeführt mit Stetig Förderern durch den Prozess geführt werden. Auch können nicht alle Güter bei Temperaturen von über 100 °C getrocknet werden (z.B. Saatgut). Hier kann das Wasser aus dem Gut nicht verdampft werden, es muss verdunstet werden. Dabei erfüllt der umlaufende Brüden, der dabei stets ein Gemisch von Wasserdampf und Gas darstellt, das Wärmeträgermedium dar. Die Trocknung des Gutes beruht dabei ebenfalls auf dem dampfdrucksenkenden Effekt der Salzlösung. Das Kreislaufgas wird dabei sozusagen "entfeuchtet".

Die Figur 3 weist hier als Anwendungsbeispiel einen Hordentrockner aus, jedoch sind auch Bandtrockner oder ähnliche Trocknungsvorrichtungen anwendbar.

Zur Trocknung des Gutes wird dieses in ein gegen die Umgebung weitestgehend abgeschlossenes System - hier einen Hordentrockner (86) eingebracht. Ein Druckausgleich durch Wärmeausdehnung von Gasen bzw. Phasenübergänge wird durch das Ventil (87) und die Leitung (88) realisiert, so dass der Trockner auch unter Umgebungsdruck betrieben werden kann. Selbstverständlich ist es auch möglich, mit Druckdifferenzen zu arbeiten (um so weitere Effekte zu nutzen), jedoch verursachen druckfeste Systeme höhere Anschaffungs- und Betriebskosten.

Die Vorteile dieser Form der Sorptionstrocknung gegenüber herkömmlichen Konvektionstrocknungsverfahren (Abluftbetrieb) liegen hier im geringeren spezifischen Wärmeverbrauch, den geringen Abluftströmen (nahe Null), und der Chemiesorption von sauren Brüdenbestandteilen (viele Geruchstoffe). Der geringere spezifische Wärmebedarf ergibt sich aus der Tatsache, dass im eigentlichen Trocknungsprozess die Verdampfungswärme zurück gewonnen wird - und bedingt durch den Gasumlauf - praktisch keine Luft zusätzlich mit aufgeheizt wird. Die "energieverbrauchenden" Prozesse laufen bei der Regeneration ab. Hier wird aber die Wärme direkt in die Flüssigkeit eingebunden und nicht über die Luft mit ihrer geringen Wärmekapazität transportiert. So kann die Luft bis zum jeweiligen Feuchte-Gleichgewichtszustand mit Wasser angereichert werden. So ergibt sich ein günstigeres Luft / Wasserdampfverhältnis, also es wird insgesamt weniger Luft mit erwärmt.

### Beschreibung der Konvektionstrocknung:

Das in den Hordentrockner (86) eingebrachte Gut (86) wird von einem warmen Wasserdampf / Gasgemisch, dessen relative Feuchte < 100% beträgt, durchströmt. Dabei nimmt das Gasgemisch Wasser bis zum Erreichen der Gleichgewichtsfeuchte (im Grenzfall 100% Feuchte) auf. Dabei kühlt sich das Gasgemisch ab, da die Verdampfungswärme des Wassers aufgebracht werden muss. Wie bei allen Konvektionstrocknungsverfahren handelt es sich hier um einen gekoppelten Stoff-und Energietransport. Das so mit Wasserdampf angereicherte Gasgemisch wird über die Leitung (84) zur Rieselkolonne (52) geführt, wo es - in aus den vorherigen Beispielen bekannter Weise - mit der Alkalilösung in Kontakt gebracht wird und so der Partialdruck des Wasserdampfes abgesenkt wird. Das bedeutet, dass (im neuen Gleichgewicht) überschüssiger Wasserdampf kondensiert und zu einer Erhöhung der Temperatur der Salzlösung - und auch einer Temperaturerhöhung des verbleibenden Gasgemisches führt.

Jedoch wird nicht - wie in den Beispielen zuvor-der Wärmeinhalt der Salzlösung genutzt, sondern letztlich der des Gasgemisches. Das so erwärmte und entfeuchtete Gasgemisch wird jetzt wieder über die Leitung (83) dem Hordentrockner zugeführt. Die Aufrechterhaltung der Konzentration der Salzlösung erfolgt nach den - aus den vorherigen Beispielen bekannten - Mechanismen.
3.2. Regeneration (Konzentrationserhöhung) des Alkali Hier wird genauso wie unter Punkt 1.2. verfahren.
4.0. Ausführungsbeispiel Anwendung elektrostatischer Sprühwäscher zur Sorptionstrocknung / Chemiesorption

Um Grenzphasenreaktionen von Wasserdampf / Wasserdampf-Gasgemischen mit der Alkalilösung bei möglichst großen Oberflächen und somit hoher Kinetik ablaufen zu lassen, wurden in den obigen Beispielen Füllkörperkolonnen beschrieben. Insbesondere im Bereich der Konvektionstrocknung ist jedoch auch die Möglichkeit des Versprühens der Alkalilösung in den Gasstrom zur Schaffung großer Grenzflächen möglich. So können auch höhere Gasgeschwindigkeiten als in den Kolonnen realisiert werden. Jedoch stößt man hier auf ein Problem: je kleiner die Tropfen sind, umso größer ist zwar die Grenzfläche für die beabsichtigten Reaktionen, allerdings wird auch die Trennung der Aerosole vom Gasstrom umso schwieriger. Eine Möglichkeit dieses Problem zu lösen stellt die aus der elektrostatischen Lackierung bekannte lonisierung der Nebel-Tröpfchen mit anschließender Abscheidung an einer Niederschlagselektrode dar. Da es sich bei der Alkalilösung um einen sehr gut leitfähigen Elektrolyt handelt, ist hier insbesondere die Leitungsionisation, bei der die Flüssigkeitssäule einen Pol des Hochspannungsfeldes darstellt, gegenüber der Feldionisation bevorzugt. Durch den hohen Grad der Ionisation können auch feine Nebel sicher wieder abgeschieden werden.

### Bezugszeichenliste

- Nr.: Bezeichnung
- 1: Zuführung des zu trocknenden Gutes (z.B. Gärrest, Gülle, Schlamm etc.)
- 2: Kondensatablauf
- 3: Gutaufgabe
- 4: Abstreifmesser
- 5: Wärmetauscher (=WT) Gutvorwärmung / Wärmerückgewinnung aus Überlauf Salz-lösung
- 6: Walzenverdampfer - Ausführungsbeispiel direkte Beheizung mit Salzlösung
- 7: Abgestreiftes trockenes Gut / festes Zielprodukt
- 8: Austrageinrichtung festes Zielprodukt
- 9: CO₂-Zuführung
- 10: Rücklauf Startbeheizung / Nachheizung Verlustausgleich
- 11: Vorlauf Startbeheizung / Nachheizung Verlustausgleich
- 12: Wärmetauscher Startbeheizung / Nachheizung Verlustausgleich
- 13: heiße Salzlösung zur Beheizung des Walzenverdampfers
- 14: Leitblech Rieselkolonne Rücklauf
- 15: Füllkörper Rieselkolonne zur Kondensation des Wasserdampfes / Stofftrennung Wasser / Ammoniak, CO₂ und andere Gase
- 16: Wasserdampf / Ammoniak / CO₂ -Gemisch und Begleitgase bzw. -dämpfe
- 17: Flüssigkeitsverteiler Ausführungsbeispiel als Düsenverteiler
- 18: Leitung vom Flüssigkeitspuffer für Salzlösung - Salz-Suspension
- 19: Flüssigkeits- bzw. Suspensionsvorrat
- 20: Rücklaufleitung vom Walzenverdampfer
- 21: festes Zielprodukt aus Prozess ausgeschleust
- 22: Leitung Suspension Salz in Salzlösung
- 23: Ventil Zuleitung Suspension Salz in Salzlösung
- 24: Außenlufteinlass
- 25: herab rieselnde und sich dabei aufkonzentrierende und abkühlende Salzlösung
- 26: feuchte Abluft (Feuchte entsprechend Gleichgewichtsfeuchte in Abhängigkeit von Temperatur der Luft und Konzentration der Salzlösung)
- 27: Kühlkreislauf Rücklauf
- 28: Kühlkreislauf Vorlauf
- 29: Restgase (CO₂ -Überschuss) Austritt
- 30: flüssiges Zielprodukt Ammoniumhydrogencarbonatlösung / Suspension
- 31: Ammoniak / CO₂ / Wasserdampf -Gasgemisch
- 32: Überlauf Salzlösung (Volumenüberschuss)
- 33: Salzlösung zum Regenerieren (Regeneriereren = Konzentrationserhöhung)
- 34: Zuführung Trocknungsgut zur Vorwärmung im WT 5
- 35: Salzlösung zum Regenerieren - hier Regenerierung über Rieselverdampfer - Ein-satz von Wärme zur Regeneration der Salzlösung
- 36: Salzlösung zum Regenerieren - hier Regenerierung über Wärmepumpe (Brüden-verdichter), Einsatz von mechanischer (elektrischer) Energie zur Regeneration der Salzlösung
- 37: Kondensat zur Restwärmenutzung im WT 55 zur Vorwärmung des zu trocknenden Gutes
- 38: WT zur Wärmerückgewinnung aus Kondensat bzw. Brüden zur Vorwärmung der zu regenerierenden Salzlösung
- 39: Ventil zur Aufrechterhaltung des Drucks bei Ausschleusung von nicht kondensier-baren Gasen, die während der Regeneration entstanden sind.
- 40: Kondensat / Brüden nach Auskondensation in der Walze
- 41: Brüdenverdichter
- 42: Leitung für Brüden nach Verdichtung zur Beheizung der Walze
- 43: Heizung Vorlauf (z.B. Kühlwasser aus Blockheizkraftwerk)
- 44: Heizung Rücklauf (z.B. Kühlwasser aus Blockheizkraftwerk)
- 45: Leitung zur Rückfühlung der erwärmten Salzlösung in die Rieselkolonne
- 46: Schräge / Leitblech zur Verringerung der Spritzwirkung beim Auftreffen der Flüssigkeitstropfen (Aerosolvermeidung)
- 47: Austragvorrichtung für Salz / Suspension in Salzlösung
- 48: Austragvorrichtung für Salz / Suspension in Salzlösung
- 49: überstehende Salzlösung
- 50: Regenerator, Ausführungsbeispiel Rieselkolonne
- 51: Regenerator, Ausführungsbeispiel Walzenverdampfer mit Brüdenverdichtung
- 52: Eindampfanlage für flüssige Güter z.B. Gärreste, Gülle, Klärschlamm o.ä.
- 53: WT zur Auskondensation und Kühlung der Reaktionspartner und Begleitgase für Ammoniumcarbonatherstellung
- 54: Ammoniumhydrogencarbonat-Reaktor und Vorratsbehälter
- 55: im Fall Brüdenverdichter WT Restwärme Brüden / zu trocknendes Material
- 56: Pumpe für Salzlösungskreislauf
- 57: WT Wärmenachnutzung z.B. für Heizung oder Kaskadennutzung mit weiteren in Reihe geschalteten Regenerator(en)
- 58: WT Luftvorwärmer
- 59: Rücklauf Wärmenachnutzung
- 60: Vorlauf Wärmenachnutzung
- 61: Pumpe für Suspension Salz in Salzlösung
- 62: Pumpe Zuführung der Salzlösung zur Regeneration
- 63: Rücklauf Salzlösung zur Walzenbeheizung
- 64: Gebläse zur Förderung der Abluft aus dem Regenerator
- 65: sedimentiertes Salz
- 66: WT zur Einkopplung von Wärme
- 67: Salzlösung / Suspension
- 68: Salzlösung zum Kreislauf
- 69: Abluft zur Wärmerückgewinnung / Kaskadennutzung
- 70: Abluft Austritt in die Umgebung
- 71: Abluft
- 72: Schieber der Kammerschleuse
- 73: Antriebsmotor der Förderspirale
- 74: Fördersprirale
- 75: Brüdenleitung
- 76: Brüden

- 77: Zu trocknendes Schüttgut
- 78: Doppelmantel als Wärmetauscher
- 79: Rücklaufleitung Alkali
- 80: Heiße Salzlösung zur Beheizung des Spiraltrockners
- 81: Salzlösung zur Verrieselung - ggf. nachgeheizt
- 82: Salzlösung mit eingestellter Konzentration
- 83: Wasserdampf / Gas ― Gemisch mit < 100% rel. Gasfeuchte
- 84: Wasserdampf / Gas - Gemisch mit ca. 100% rel. Gasfeuchte
- 85: zu trocknendes Gut
- 86: Hordentrockner
- 87: Druckausgleich
- 88: Lufteintritt bzw. Gasaustritt zum Druckausgleich
- 89: Brüdenleitung
- 90: Brüdenverdichter
- 91: Austrittsventil
- 92: Verdampferapparatur
- 93: Salzlösung zur Regeneration

## Patentansprüche

1. Verfahren zur Sorptionstrocknung, umfassend folgende Schritte:
das zu trocknende Gut wird einer Wärmebehandlung unterzogen durch Wärmeleitung, oder / und durch einen gasförmigen Wärmeträger oder / und durch Wärmestrahlung,
der entstehende Brüden wird über ein Sorbens aus einer wässrigen Alkalisalzlösung, die ausgewählt ist aus einer Kaliumhydroxidlösung und /oder Kaliumcarbonatlösung, bevorzugt einer konzentrierten, wässrigen Lösung von Kaliumcarbonat mit 50% - 100% Sättigung, geleitet,
wobei die Grenzfläche zwischen Brüden und Alkalisalzlösung durch technische Maßnahmen flächenmäßig groß gehalten wird.

2. Verfahren nach Anspruch 1, **dadurch gekennzeichnet, dass** als technische Maßnahmen zur Vergrößerung der Grenzfläche zwischen Brüden und Alkalisalzlösung Füllkörperkolonnen, ein Versprühen oder Vernebeln, in oder ohne Verbindung mit Ionisation zur anschließenden elektrostatischen Abscheidung, ggf. zusätzlich durch Fliehkraftabscheidung unterstützt, oder durch Benetzung fester und bewegter Flächen eingesetzt werden.

3. Verfahren nach irgendeinem der Ansprüche 1 oder 2, **dadurch gekennzeichnet, dass** die Alkalisalzlösung neben der (Teil)Kondensation des Wassergehaltes des Brüdens zeitgleich eine Stofftrennung der nicht vom Brüden aufgenommenen separierten Komponenten z.B. Ammoniak, CO₂ und eine Sorption von anderen Brüdenbestandteile (z.B. organischer Säuren) in der Alkalisalzlösung vornimmt.

4. Verfahren nach Anspruch 3, **dadurch gekennzeichnet, dass** die von der Alkalisalzlösung aufgenommenen Brüdenbestandteile thermisch oder chemisch abgeschieden werden, vorzugsweise durch Fällung (z.B. Sulfid) oder / und thermische Läuterung oder / und nasschemische Oxidation, insbesondere durch Oxidationsmittel wie Wasserstoffperoxid oder durch elektrochemische Oxidation.

5. Verfahren nach irgendeinem der Ansprüche 1 bis 4, **dadurch gekennzeichnet, dass** die Alkalisalzlösung durch Erhöhung der Konzentration, d.h. durch Austreiben von Wasser, regeneriert wird, wobei diese. Regeneration bevorzugt entweder durch Durchleiten von Luft durch die, -bevorzugt durch Niedertemperatur-Abwärme (50 -100°C) beheizte, - Alkalisalzlösung erfolgt, -wobei die Grenzfläche zwischen Alkalisalzlösung und Luft durch technische Maßnahmen wie Verrieselung oder durch Benetzung bewegter Flächen vergrößert wird- oder durch Wärmepumpenprozesse, wobei das Verfahren einer Brüdenverdichtung zur Anwendung kommt, um die Kondensationswärme als Verdampfungswärme zurück zu gewinnen.

6. Verfahren nach irgendeinem der Ansprüche 1 bis 5, **dadurch gekennzeichnet, dass** das zu trocknende Gut ein Nahrungsmittel, insbesondere Milchpulver, ein land-, garten- oder forstwirtschaftliches Produkt, insbesondere eine Pflanzensaat, ein anorganischer und / oder organischer Abfall, insbesondere Exkrement von Wirbeltieren, Haushalts-, kommunale, landwirtschaftliche, forstwirtschaftliche und / oder industrielle Abwässer ist.

7. Verfahren nach irgendeinem der Ansprüche 1 bis 6, **dadurch gekennzeichnet, dass** für die Sorptionstrocknung durch Wärmeleitung bei organischem Abfall, insbesondere Gülle, Gärrest, Klärschlamm oder anderen flüssigen Substanzen Walzenverdampfer zum Einsatz kommen, in Verbindung mit der beschriebenen Sorptionstechnik.

8. Verfahren nach irgendeinem der Ansprüche 1 bis 7, **dadurch gekennzeichnet, dass** die Verfahren zur Sorptionstrocknung und zur Regeneration der Alkalisalzlösung zeitlich und / oder räumlich getrennt ablaufen, wobei das Alkalisalz bzw. die Alkalisalz-Lösung als Sorptionsspeicher fungieren.

9. Verfahren nach irgendeinem der Ansprüche 1 bis 7, **dadurch gekennzeichnet, dass** die bei der Überleitung des Brüdens über die Alkalisalzlösung durch Dampfdruckabsenkung verursachte Temperaturerhöhung, -die bei Atmosphärendruck und Verwendung von Kaliumcarbonatlösung bis maximal etwa 135 °C stattfindet,- zum Beheizen des zu trocknenden Gutes verwendet wird, .wobei die Wärme durch die Alkalisalzlösung (Kontakttrocknung) oder den Restbrüden (Konvektionstrocknung) indirekt (bei Kontakttrocknung) oder direkt (bei Konvektionstrocknung) auf das zu trocknende Gut übertragen wird, wobei dies als chemische Wärmepumpe abläuft, und die Kondensationswärme als Verdampfungswärme zurückgewonnen wird.

10. Vorrichtung zur Durchführung des Verfahrens nach irgendeinem der Ansprüche 1 bis 9, **dadurch gekennzeichnet, dass** der Trocknungsbehälter aber auch die Vorrichtung zur Regeneration der Alkalisalzlösung gegen Gasdiffussion und Wärmetransmission an die Umgebung isoliert ist.

11. Vorrichtung zur Durchführung des Verfahrens nach Anspruch 10, **dadurch gekennzeichnet, dass** die Sorptionstrocknung bei nicht-schüttfähigen Gütern durch einen Konvektionstrockner, vorzugsweise einen Hordentrockner, und bei schüttfähigen Gütern durch Kontakttrocknung erfolgt, und die Regeneration der Alkalisalzlösung durch Brüdenverdichtern, vorzugsweise mittels Walzenverdampfer, Rieselverdampfer und / oder Scheibenverdampfer erfolgt.

12. Weiterverarbeitung der gemäß irgendeinem der Ansprüche 1 bis 4 oder 9 aus ammoniakhaltigen Substanzen, wie Gülle, Gärrest, Klärschlamm im Zuge der ammoniakhaltigen Substanzen, wie Gülle, Gärrest, Klärschlamm im Zuge der Sorption des Wasserdampfes und der organischen Säuren verbleibenden Restbrüden, - welcher hauptsächlich aus Ammoniak, CO₂ und Wasserdampf (Gasfeuchte) besteht -, zu Ammoniumhydrogencarbonat, . wobei der Restbrüden während des Eindampfprozesses eine wenigstens stöchiometrische Menge an reinem CO₂ oder CO₂-reichen Gasgemischen zugeführt wird.

13. Weiterverarbeitung des gemäß irgendeinem der Ansprüche 1 bis 9 erhaltenen getrockneten Gutes aus anorganischem oder organischen Abfall zu Trockendünger oder nach Entfernung der organischen Bestandteile zu Mineraldünger.

14. Weiterverarbeitung der gemäß irgendeinem der Ansprüche 1 bis 3 oder 9 erhaltenen separierten Brüdenbestandteile zu Kohlendioxid und oder Wasser.
